# EUROPEAN PATENT APPLICATION

(11) **EP 3 933 733 A1**
(43) Date of publication of application: **05.01.2022**
(21) Application number: 19917056.4
(22) Date of filing: 22.07.2019
(51) Int. Cl.: G06Q 20/32, G06Q 20/40, G06Q 20/16, H04L 29/08

(54) **HTTP PROTOCOL-BASED SERVER, USER TERMINAL FEE COLLECTION SYSTEM, AND FEE COLLECTION METHOD**

(30) Priority: 25.02.2019 CN 201910137752
(71) Applicant: Shanghai Finmail Network Technology Co., Ltd., Shanghai 201413 (CN)
(72) Inventor: ZHANG, Haimin, Shanghai 200442 (CN)
(74) Representative: Argyma
(86) International application number: PCT/CN2019/097047
(87) International publication number: WO 2020/173041

(57) **Abstract**

An HTTP-based server payment collection system, an HTTP-based user terminal payment collection system, and an HTTP-based payment collection method are provided. A header field containing payment collection information is added under the conventional HTTP protocol. Through integration of the HTTP protocol and digital currency / electronic currency, the conventional HTTP protocol acquires financial functions, such as remittance, payment collection. The payment collection between the user and the webpage contents provider is also realized for value transmission while the HTTP protocol transmits information. The payment collection system and the payment collection method can be extensively used in servers and user terminals, such as browsers, media players, and readers, to synchronize the transmission of information and value in HTTP protocol. The present invention is characterized in synchronous transmission of value and information, no mutual interference between value transmission and information transmission, value transmission without using a dedicated account, convenience, high efficiency and, time and cost saving.

## Description

### BACKGROUND OF THE INVENTION

### Field of the Invention

The present invention relates to an electronic payment collection technology, particularly to an HTTP-based server payment collection system, an HTTP-based user terminal payment collection system, and an HTTP-based payment collection method.

### Description of the Prior Art

With population of the Internet, the HTTP-based Internet resources have become extensively-used information sources, especially for business management and public affairs. However, HTTP protocol itself can only support information transmission but cannot undertake financial functions. Such a situation greatly limits the application of HTTP and the commercial modes derived therefrom.

On the other side, the trend of blockchains and digital currencies (such as Bitcoin) is to develop into a bank or a third-party agency payment system. However, the existing technology of blockchains and digital currencies is still hard to achieve the transmission efficiency and legal protection of a bank. Thus, blockchains and digital currencies still lack a foundation of practical application. Therefore, the existing technology of blockchains and digital currencies is still unable to realize the value thereof. Besides, the anonymity disables digital currencies from acquiring necessary legal support and surveillance. Further, most of third-party agency payment systems are substantially extensions of banks, unlikely to synchronously transmit value and information (such as websites and video information).

As the current marketing model, ordinary companies normally purchase online marketing services, such as online advertisements, from Internet advertisement industries. Then, the Internet advertisement industry posts the advertisement on a mass-flow webpage. From the viewpoint of a user, random and compulsory advertisements on webpages tremendously affect normal usage of websites, such as editing a mail or watching an online video program. In such a scenario, the advertisements are likely to make a negative impression and less likely to get a wished result. From the viewpoint of a company, due to limited coverage, limited advertisement modes of the advertisement industry and other limitations, heavy capital investment can only result in a small increase in reputation. In such a situation, the advertisement is hard to interest the potential customers and likely to get a low capital investment efficiency. In order to solve the abovementioned problems, a portion of websites adopt membership systems. In other words, the users pay to obtain membership and exempt themselves from the interference of advertisement. However, such a measure makes people feel bound and compulsive, neither really interesting customers nor actually benefiting the company.

The online media businesses and other related businesses are normally operated in a package system, wherein the contents are presented in a given interval of time periodically or the contents are presented in a package form. The payment of the online media has not yet been accurate to such an extent that the bill is counted for each specified webpage or contents. Thus, the user may spend a lot of money on meaningless contents. From the viewpoint of a user, he should be less likely to spend a lot of time and money for only a small volume of pay media contents. From the viewpoint of a company, the package system would lead to loss of fast-moving users and hinder online media from realizing its value.

In the existing conditions, information transmission and value transmission should be performed separately, which results in enormous waste of time and money. Further, asynchronous transmission of information and value is likely to cause troubles and mistakes, which will further lead to commercial disputes and social events.

### SUMMARY OF THE INVENTION

One objective of the present invention is to provide an HTTP-based server payment collection system, an HTTP-based user terminal payment collection system, and an HTTP-based payment collection method to overcome the current problem that value and information are separately transmitted and improve the application of the HTTP protocol in the finance field.

In order to solve the abovementioned problem, the present invention proposes the following technical schemes.

In a first aspect, one embodiment of the present invention provides an HTTP-based server payment collection system, which includes a payment collection message management server, a webpage management server, and a funding management server.

The payment collection message management server interoperates with the webpage management server and the funding management server.

The payment collection message management server is configured to receive an HTTP payment collection request message sent from a user and identify payment collection information of the HTTP payment collection request message.

The payment collection message management server is also configured to dispatch the webpage management server to acquire webpage contents and perform a settlement according to a settlement method corresponding to the webpage contents.

The payment collection message management server is also configured to generate an HTTP payment collection confirmation response message according to the webpage contents, feed the HTTP payment collection confirmation response message back to the user, and provide the webpage contents to the user.

The payment collection message management server is also configured to dispatch the funding management server to perform a remittance operation for the user according to an amount of the settlement and the payment collection information wherein

The payment collection information includes a payment target and a payment collection method;

The payment collection information is added in a header field of the HTTP payment collection request message.

In a second aspect, one embodiment of the present invention provides an HTTP-based user terminal payment collection system, which includes a payment collection message management module, a webpage management module, and a funding management module.

The payment collection message management module interoperates with the webpage management module and the funding management module.

The payment collection message management module is configured to send an HTTP ordinary request message to a webpage service terminal to receive an HTTP payment collection response message and identify payment collection information of the HTTP payment collection response message.

The payment collection message management module is also configured to dispatch the funding management module to perform a remittance operation on the webpage service terminal according to the payment collection information, generate an HTTP payment collection confirmation request message according to information of the remittance operation and send out the HTTP payment collection confirmation request message to receive an HTTP ordinary response message carrying paid webpage contents.

The payment collection message management module is also configured to dispatch the webpage management module to show the paid webpage contents according to the HTTP ordinary response message, wherein

The payment collection information includes a payment target and a payment collection method;

The payment collection information is added in a header field of the HTTP payment collection response message.

In a third aspect, one embodiment of the present invention provides a payment collection method of an HTTP-based server payment collection system, wherein the HTTP-based server payment collection system includes a payment collection message management server, a webpage management server, and a funding management server.

The payment collection method includes
Step A1: the payment collection message management server receives an HTTP payment collection request message from a user and identifies payment collection information of the HTTP payment collection request message;
Step A2: the payment collection message management server dispatches the webpage management server to acquire webpage contents and performs a settlement according to a settlement method corresponding to the webpage contents;
Step A3: the payment collection message management server generates an HTTP payment collection confirmation response message according to the webpage contents, feeds the HTTP payment collection confirmation response message back to the user to provide the webpage contents to the user; and
Step A4 executed during or after Step A3: the payment collection message management server dispatches the funding management server to perform a remittance operation for the user according to an amount of the settlement and the payment collection information, wherein the payment collection information includes a payment target and a payment collection method; the payment collection information is added in a header field of the HTTP payment collection request message.

In a fourth aspect, one embodiment of the present invention provides a payment collection method of an HTTP-based payment collection message management server.

The payment collection method includes:
Step B1: the payment collection message management server receives an HTTP payment collection request message from a user and identifies payment collection information of the HTTP payment collection request message;
Step B2: The payment collection message management server sends out a webpage allocation instruction to acquire webpage contents according to the HTTP payment collection request message;
Step B3: The payment collection message management server generates an HTTP payment collection confirmation response message according to the webpage contents, feeds the HTTP payment collection confirmation response message back to the user to provide the webpage contents to the user; and
Step B4 executed during Step B3: The payment collection message management server performs a settlement according to a settlement method of the webpage contents; and
Step B5 executed during/after Step B3 or during/after Step B4: The payment collection message management server sends out a remittance allocation instruction to perform a remittance operation for the user according to the amount of the settlement and the payment collection information, wherein the payment collection information includes a payment target and a payment collection method; the payment collection information is added in a header field of the HTTP payment collection request message.

In a fifth aspect, one embodiment of the present invention provides a payment collection method of an HTTP-based user terminal payment collection system, wherein

The HTTP-based user terminal payment collection system includes a payment collection message management module, a webpage management module, and a funding management module;

The payment collection method includes:
Step C1: The payment collection message management module sends an HTTP ordinary request message to a webpage service terminal to receive an HTTP payment collection response message and identify payment collection information from the HTTP payment collection response message;
Step C2: The payment collection message management module dispatches the funding management module to perform a remittance operation on the webpage service terminal according to the payment collection information, generates an HTTP payment collection confirmation request message according to information of the remittance operation and sends out the HTTP payment collection confirmation request message to receive an HTTP ordinary response message carrying paid webpage contents; and
Step C3: The payment collection message management module dispatches the webpage management module to show the paid webpage contents according to the HTTP ordinary response message; wherein the payment collection information includes a payment target and a payment collection method; the payment collection information is added in a header field of the HTTP payment collection response message.

Because of adopting the abovementioned technical schemes, the present invention has the following advantages over the conventional technologies:
(1) Via adding payment collection information in an HTTP payment collection request message or an HTTP payment collection response message to integrate HTTP protocol and digital currency/electronic currency, the conventional HTTP protocol obtains financial functions, such as payment collection; through the payment collection information, the payment collection message management server, the webpage management server, and the funding management server cooperate to work, whereby while information is transmitted in HTTP protocol, payment collection is simultaneously undertaken between the user and the webpage contents providers, wherefore the present invention can realize transference of value and promote the financial applications of HTTP protocol.
(2) The present invention adds payment collection information in a header field of an HTTP payment collection request message or an HTTP payment collection response message. The position of the payment collection information is identifiable. The payment collection information neither influences readability and transmission of normal information in HTTP nor affects the contents of webpages. The transmission of webpage contents through the request message is performed simultaneously with the transmission of value for payment collection from the webpage service terminal or the user through the payment collection information of the request message. Since the information transmission is less likely to involve the transmission of value normally, the transmission of value does not delay the transmission of information normally. In some cases, the transmission of information may involve the transmission of value. However, the efficiency may be promoted via technical improvement. For example, a specified digital currency is used in remittance, or the third-party digital/electronic currency is used in real-time payment. Thus, the transmission of information is not obviously delayed by the transmission of value. Therefore, the present invention achieves a technical effect to prevent from mutual interference between the transmission of information and the transmission of value in HTTP protocol.
(3) In the present invention, the payment collection information is directly provided by the user or the webpage service terminal. The user can directly realize payment or payment collection without using a dedicated account. Further, the receiver of the HTTP payment collection request message or the HTTP payment collection response message can undertake barrier-free remittance to an arbitrary visitor or server. Therefore, the present invention achieves convenient and human-friendly transmission of information and value.
(4) The present invention uses the funding management server or funding management module to verify the payment collection information to guarantee the legality and security of the payment collection information. The present invention also uses the database server or database module to undertake optimized selection of the verified payment collection information to provide the user and/or the server with diversified payment collection information and improve the compatibility between the payment party and the payment collection party. Therefore, the present invention achieves optimization and humanity of payment collection and diversification of payment collection methods.
(5) The present invention uses the payment collection message management server to place the optimized payment collection information in the HTTP payment collection confirmation response message or the HTTP payment collection confirmation request message, thereby feeding the payment collection-related information back to the user or the webpage service terminal. Further, the user may send a lookup request to look up related contents in the database server or database module. Therefore, the present invention realizes diversified and human-friendly information feedback.
(6) The present invention uses the digital currency interaction server and the third-party digital/electronic currency interaction server to convert an internal request from the funding management server and an external request from a network to execute physical remittance or verify information. Therefore, the present invention can support the remittance of multiple kinds of currencies and diversifies remittance approaches. Further, the conversion of the internal request and the external request realizes the synchronized cross-platform transmission of information and value. Similarly, the user terminal payment collection system of the present invention uses the digital currency interaction server and the third-party digital/electronic currency interaction server to undertake a conversion between an internal request from the funding management server and an external request from a network so as to make practical remittance or to verify information. Therefore, the user terminal payment collection system of the present invention can support the remittance of multiple kinds of currencies and diversifies remittance approaches. Further, the conversion of the internal request and the external request realizes the synchronized cross-platform transmission of information and value in the user terminal payment collection system of the present invention.
(7) The present invention uses the payment switch and the payment collection switch to: turn on or off the functions of generating and verifying of the payment collection information; and turn on or off the value transference in the HTTP payment collection request message or the payment collection response message. Therefore, the present invention provides a human-friendly payment collection system.

### BRIEF DESCRIPTION OF THE DRAWINGS

Fig. 1 is a diagram schematically showing the architectures of an HTTP-based server payment collection system and HTTP-based user terminal payment collection system according to the present invention.
Fig. 2 is a diagram schematically showing a payment collection request message of an HTTP-based server payment collection system according to the present invention.
Fig. 3 is a diagram schematically showing a payment collection confirmation response message of an HTTP-based server payment collection system according to the present invention.
Fig. 4 is a diagram schematically showing a payment collection response message of an HTTP-based user terminal payment collection system according to the present invention.
Fig. 5 is a diagram schematically showing a payment collection confirmation request message of an HTTP-based user terminal payment collection system according to the present invention.
Fig. 6 is a flowchart of a payment collection method of an HTTP-based server payment collection system according to one embodiment of the present invention.
Fig. 7 is a flowchart of a payment collection method of an HTTP-based server payment collection system according to another embodiment of the present invention.
Fig. 8 is a flowchart of a payment collection method of an HTTP-based user terminal payment collection system according to one embodiment of the present invention.
Fig. 9 is a flowchart of a payment collection method of an HTTP-based user terminal payment collection system according to another embodiment of the present invention.

### DETAILED DESCRIPTION OF THE INVENTION

Below, embodiments and attached drawings are used to further demonstrate the HTTP-based server payment collection system, HTTP-based user terminal payment collection system, and HTTP-based payment collection method of the present invention, whereby to make more clear the advantages and characteristics of the present invention.

Digital/encrypted currency: decentralized digital currency, such as Bitcoin and Litecoin, generally generated through mining work and hereinafter referred to as digital currency.

Electronic currency: electronic conventional/legal currency or tokens and virtualized electronic currency of related payment services, such as PayPal and Alipay.

HTTP payment collection request message: an HTTP request message whose header contains payment collection information so as to be verified by a server.

HTTP payment collection confirmation response message: an HTTP response message whose header contains payment collection information for confirming the reception of remittance operation so as to be fed back to a user.

HTTP payment collection response message: an HTTP response message whose header contains payment collection information so as to be confirmed by a user terminal.

HTTP payment collection confirmation request message: an HTTP request message whose header contains payment collection information for confirming payment reception so as to be fed back to a webpage service terminal.

HTTP ordinary request message: an ordinary HTTP request message whose header contains no payment collection information.

HTTP ordinary response message: an ordinary HTTP response message whose header contains no information in which the server confirms the acceptance of the payment collection methods.

In the embodiment, the HTTP request message is normally sent by a user terminal to a server; the HTTP response message is normally responded by a server to a user terminal. The relationships and sequences thereof are described below.

Ordinary request process: a user terminal sends an "HTTP ordinary request message" to a server; the server responds an "HTTP ordinary response message" to the user terminal.

A user terminal sends out a payment collection request: the user terminal sends an "HTTP payment collection request message" to a server; the server responds an "HTTP payment collection confirmation response message" to the user terminal.

A server sends out a payment collection request: a user terminal sends an "HTTP request message", which is normally an ordinary request; the server sends an "HTTP payment collection response message" to the user terminal; and the user terminal sends an "HTTP payment collection confirmation request message".

HTTP protocol: HyperText Transfer Protocol and a related extension thereof, such as HyperText Transfer Protocol Secure (HTTPS).

### Embodiment One

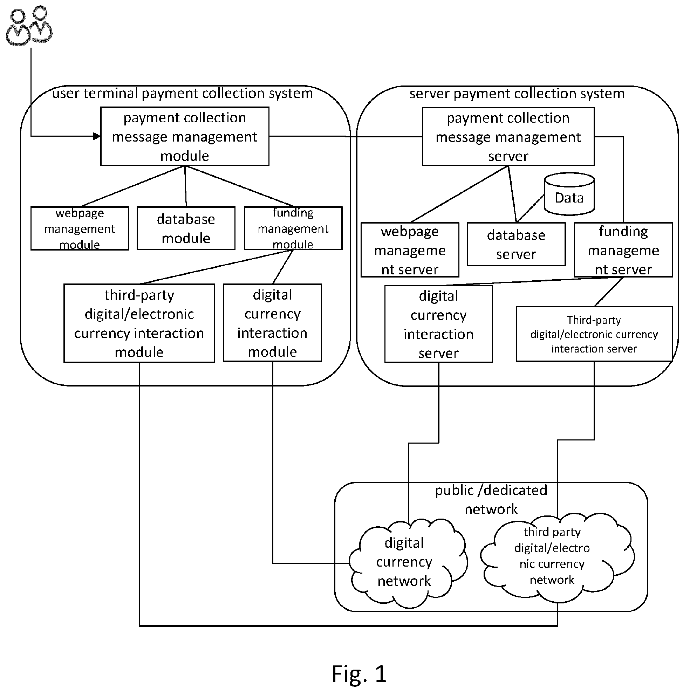

Referring to Fig. 1, Embodiment One provides an HTTP-based server payment collection system, which includes a payment collection message management server, a webpage management server, and a funding management server.

The payment collection message management server interoperates with the webpage management server and the funding management server.

The payment collection message management server is configured to receive an HTTP payment collection request message from a user and identify payment collection information of the HTTP payment collection request message.

The payment collection message management server is also configured to dispatch the webpage management server to acquire webpage contents and perform a settlement according to a settlement method corresponding to the webpage contents.

The payment collection message management server is also configured to generate an HTTP payment collection confirmation response message according to the webpage contents, feed the HTTP payment collection confirmation response message back to the user, and provide the webpage contents to the user.

The payment collection message management server is also configured to dispatch the funding management server to perform a remittance operation for the user according to an amount of the settlement and the payment collection information, wherein:
the payment collection information includes a payment target and a payment collection method;
the payment collection information is added in a header field of the HTTP payment collection request message.

Now refer to Figs. 1-3 for a detailed description of Embodiment One.

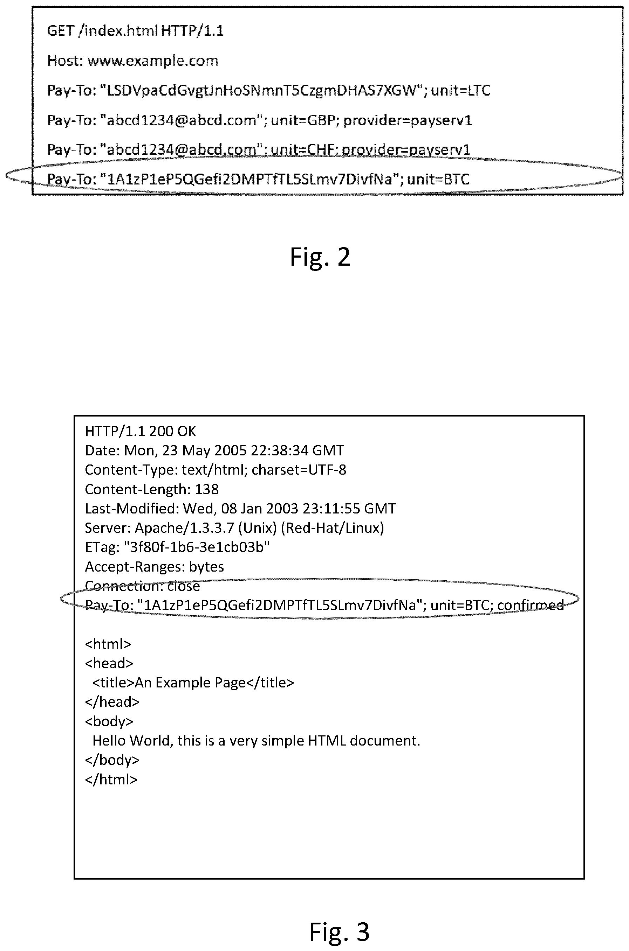

Specifically refer to Fig. 2 and Fig. 3. Neither the conventional HTTP request message nor the conventional HTTP response message has the Pay-To field circumscribed in Fig. 2 and Fig. 3. In Embodiment One, circumscribed Pay-To fields shown in Fig. 2 and Fig. 3 are added in the conventional HTTP request message and the conventional HTTP response message, respectively. The Pay-To field is added after HTTP protocol's being converged with the currency protocol. The Pay-To field in Fig. 2 is used for payment collection, and the Pay-To field in Fig. 3 is used for feeding back information, whereby to realize the synchronization of information transmission and value transmission. The encircled Pay-To field is added in the header field of the HTTP request message or the HTTP response message.

Specifically, the payment collection information of the HTTP request message or the HTTP response message may be in a format of:
/*Pay-To:* <" *address the payment is paid to">;*
*unit=<unit (including type)>;*
*provider=[label of service provider][; confirmed]*/*.*

For examples:
/*Pay-To: "1A1zP1eP5QGefi2DMPTfTL5SLmv7DivfNa"; unit=BTC*/*;*
/*Pay-To: "abcd1234@abcd.com"; unit=CNY; provider=payserv1*/*;* or
/*Pay-To: "1A1zP1eP5QGefi2DMPTfTL5SLmv7DivfNa"; unit=BTC; confirmed*/*.*

"//" is used to define a complete header field of "Pay-To", whereby a plurality of header fields of "Pay-To" are provided for the server to select from different payment collection methods. However, the "//" character itself does not belong to the header field of "Pay-To". "Confirmed" denotes that the payment collection information has been confirmed and is normally placed in an HTTP payment collection confirmation request message or an HTTP payment collection confirmation response message.

In Embodiment One, the payment collection information is added in the header field of the HTTP payment collection request message or the HTTP payment collection confirmation response message. The position of the payment collection information is identifiable, and the position itself neither influences the transmission and reading of the normal information in HTTP nor influences the webpage contents. The transmission of webpage contents through the request message is performed simultaneously with the transmission of value for payment collection from the webpage service terminal or the user through the payment collection information of the request message. Since the information transmission is less likely to involve the transmission of value normally, the transmission of value does not delay the transmission of information normally. In some cases, the transmission of information may involve the transmission of value. However, the efficiency may be promoted via technical improvement. For example, a specific digital currency is used in remittance, or the third-party digital/electronic currency is used in real-time payment. Thus, the transmission of information is not obviously delayed by the transmission of value. Therefore, the present invention achieves a technical effect to prevent from mutual interference between the transmission of information and the transmission of value in HTTP.

In details, the webpage contents can be transmitted in HTTP protocol, such as text, pictures, audio, video, files, or a webpage.

In details, the payment collection information is input from a user terminal by a user. The user terminal can be either an information transmission terminal, such as a browser, a media player, or a reader, or a device having HTTP function, such as a mobile phone, a tablet computer, or a personal computer.

In details, the payment collection information includes a payment target and a payment collection method. The payment target is a payment address or a payment account. The payment-collection address may be a Bitcoin address or a Litecoin address, etc. The payment-collection account may be an account of PayPal or Alipay, etc. The payment collection information carries the information of the service providers of the accounts, such as the information of PayPal, Alipay and BitPay. Furthermore, the payment collection information also includes currency units, such as Chinese Yuan (CNY), US dollar (USD), Bitcoin (BTC), and Litecoin (LTC).

In Embodiment One, the payment collection information is directly provided by the user. That is, the user can directly realize payment or payment collection without using a dedicated account. Further, the receiver of the HTTP payment collection request message can undertake accessible remittance to an arbitrary visitor. Therefore, the present invention achieves convenient and human-friendly transmission of information and value.

Refer to Fig. 1. It is preferred: the payment collection message management server is also configured to dispatch the funding management server to verify the usability of the payment collection information.

In Embodiment One, the funding management server verifies the payment collection information to guarantee the legality and security of the payment collection information.

Refer to Fig. 1. It is preferred: the HTTP-based server payment collection system of Embodiment One further includes a database server. The database server is configured to store or update the payment collection information, the settlement method, and the priority of payment collection. The database server respectively interacts with the payment collection message management server and the funding management server. The payment collection message management server is also configured to dispatch the database server to perform selection according to the priority of payment collection to determine an optimized piece of payment collection information as the remittance method in a remittance operation, wherein the optimized piece of payment collection information is a piece of usable payment collection information whose payment target has a highest priority and whose payment collection method has a highest priority.

It is preferred: the payment collection information includes a plurality of payment targets, a plurality of payment collection methods, and a plurality of currency units; an optimized piece of payment collection information is determined according to a usability verification and the priority of payment collection.

In details, the priority of payment collection includes the priority of payment targets and the priority of the payment collection methods. The priority of payment collection further includes the priority of currency units. According to the priority of currency units, an optimized currency unit is determined in the optimized piece of the payment collection information. It is preferred: the priority of payment collection can be set up by the user in the user terminal.

In details, settlement methods may be in various forms, such as the number of clicking, behaviors, staying time, access time, webpage types and reward methods. The settlement method may be set by the provider of the webpage contents.

In details, the remittance operation can be automatically executed through a script, a digital currency protocol, or an interaction with a third-party agency. The remittance operation can be performed at a specified time point periodically, such as once per day or once per week. The remittance is operated according to a specified settlement method. The server can set an allowed minimum amount of each remittance to prevent from that a great number of small remittances appear.

It is preferred: the remittance can be performed in a mixing service or a strong-privacy digital currency to prevent from that track is undertaken according to the address of the digital currency and the transaction ID. Thereby, Embodiment One can decrease the risk of leaking the HTTP server and the address and amount of the digital currency of the remittee.

In Embodiment One, the funding management server undertakes verification to guarantee the legality and security of the payment collection information. Further, the database server or database module selects an optimized piece of the verified payment collection information. Thus, the user and/or the server can provide many pieces of different payment collection information to increase the compatibility of the payer and the payee. Therefore, the Embodiment One can realize optimized, diversified and human-friendly payment collection.

Refer to Fig. 1. It is preferred: the payment collection message management server also places the optimized pieces of payment collection information in the header field of the webpage contents to feed back the information to the user.

Refer to Fig. 1. It is preferred: the database server stores the detailed records of bills and remittance; the payment collection message management server receives the lookup request sent out by the user, dispatches the funding management server to verify the validity of the lookup request; according to the valid lookup request, the payment collection message management server dispatches the webpage management server to acquire the webpage contents and dispatches the database server to acquire the lookup contents; then, the payment collection message management server generates the lookup result according to the webpage contents and the lookup contents and feeds back the lookup result to the user.

In Embodiment One, the payment collection message management server places the optimized piece of payment collection information in the header field of the webpage contents to feed back the payment-related information to the user; the user may also send out a lookup request through the user terminal to look up related contents in the database server. Therefore, the present invention achieves a technical effect of diversified and human-friendly information feedback.

Refer to Fig. 1. It is preferred in Embodiment One: the HTTP-based server payment collection system further includes an internal and external network interface; the internal and external network interface includes a digital currency interaction server and a third-party digital/electronic currency interaction server; the digital currency interaction server and the third-party digital/electronic currency interaction server respectively interact with the funding management server to convert an internal request coming from the funding management server and an external request coming from a network for executing remittance physically or verifying information.

Refer to Fig. 1. The digital currency interaction server is a server that executes a digital currency service program; the third-party digital/electronic currency interaction server is a server supporting local or third-party interfaces.

In Embodiment One, the server payment collection system uses the digital currency interaction server and the third-party digital/electronic currency interaction server to convert an internal request coming from the funding management server into an external request coming from a network for executing remittance physically or verifying information. Thereby, the server payment collection system can support the remittance of multiple kinds of currencies and diversifies remittance approaches. Further, the conversion of the internal request and the external request realizes the synchronized cross-platform transmission of information and value.

It is preferred in Embodiment One: the HTTP-based server payment collection system further includes a payment switch and/or a payment collection switch; the payment switch is configured to turn on and off a function of identifying the payment collection information, whereby to control the remittance operation; the payment collection switch is configured to control whether payment collection information is generated in the HTTP response message sent to the user, whereby to control the payment collection from the user.

In details, after the payment switch is turned on, the server identifies the payment collection information of the HTTP payment collection request message, whereby the server can provide webpage contents according to circumstances, perform a settlement and perform remittance to the user; after the payment switch is turned off, the server shields the payment collection information of the HTTP payment collection request message, whereby the server can handle it as an ordinary case.

In details, after the payment switch is turned on, the server sends out an HTTP response message that contains payment collection information, i.e. an HTTP payment collection response message, whereby the user terminal can identify the payment collection information of the HTTP payment collection response message and thus can perform remittance according to circumstances; after the payment switch is turned off, the server sends out an HTTP response message that contains no payment collection information, i.e. an HTTP ordinary response message, whereby the user terminal can handle it as an ordinary case.

In Embodiment One, the payment switch and/or the payment collection switch is used to turn on/off the transmission of value in the HTTP request message. Therefore, the present invention can achieve a technical effect of human-friendly value transmission.

It is preferred in Embodiment One: the present invention further includes an HTTP server extension module; the payment collection message management module is loaded into the HTTP extension module, whereby to identify the HTTP request message containing payment collection information.

In Embodiment One, identification of the payment collection information of the HTTP request message is enabled via loading the payment collection message management module into the HTTP server extension module, whereby to extend an ordinary server and achieve a technical effect of low cost and wide application range.

In order to guarantee security and prevent from tampering, all the HTTP communications involving payment collection information must be transmitted in encryption, such as in HTTPS.

Below are listed the technical effects of Embodiment One on payment collection.

In the case of online advertisement, Embodiment One makes possible a cross-platform mode of "watching AD makes money; no AD, no money" through HTTP and the currency protocol, whereby to solve the problems of low advertisement capital utilization rate and low advertisement efficiency. In Embodiment One, the user can obtain digital/electronic currency via watching advertisement and thus finds the products he is really interested in. Alternatively, the user may choose a mode "no AD, no money", whereby the user can use the websites without interference. Because of the cross-platform characteristic of digital currency, the user needn't register a dedicated account but only needs a suitable browser to browse on compatible websites and get money. Therefore, the user has high-level freedom and option. For the company adopting the abovementioned mode, it can directly deliver the advertisement capital to the market and the final users, whereby to reduce the intermediate cost, get better advertisement effect, and generate higher user proactivity.

In the case of encouragement, the website gives rewards to the first 100 visitors or encourages interaction contents (such as a game). Because the user needn't register his account, the user can directly visit the website to get reward. Thereby, the cost of time and money is decreased for both parties, and the website can obtain a better promotion effect.

In the case of downloading files, HTTP not only can transfer website contents (such as HTML) but also can directly transmit images or files. Therefore, the server not only can undertake payment collection in webpages (such as HTML) but also can undertake payment collection in the contents interacting with each other through HTTP. Therefore, the present invention can achieve a better file sharing effect and a better advertisement effect.

### Embodiment Two

Based on Embodiment One, the present invention further provides an HTTP-based user terminal payment collection system. Embodiment Two is different from Embodiment One in that the server issues the payment collection information and that the user terminal issues the payment collection confirmation information and undertakes remittance.

Refer to Fig. 1. The system structure of Embodiment Two is similar to that of Embodiment One. The HTTP-based user terminal payment collection system includes a payment collection message management module, a webpage management module, and a funding management module.

The payment collection message management module interoperates with the webpage management module and the funding management module.

The payment collection message management module is configured to send an HTTP ordinary request message to a webpage service terminal to receive an HTTP payment collection response message and identify payment collection information of the HTTP payment collection response message.

The payment collection message management module is also configured to dispatch the funding management module to perform a remittance operation to the webpage service terminal according to the payment collection information, generate an HTTP payment collection confirmation request message according to information of the remittance operation and send out the HTTP payment collection confirmation request message to receive an HTTP ordinary response message carrying paid webpage contents.

The payment collection message management module is also configured to dispatch the webpage management module to show the paid webpage contents according to the HTTP ordinary response message, wherein the payment collection information includes a payment target and a payment collection method; the payment collection information is added in a header field of the HTTP payment collection response message.

Refer to Fig. 1, Fig. 4 and Fig. 5 for detailed description of Embodiment Two.

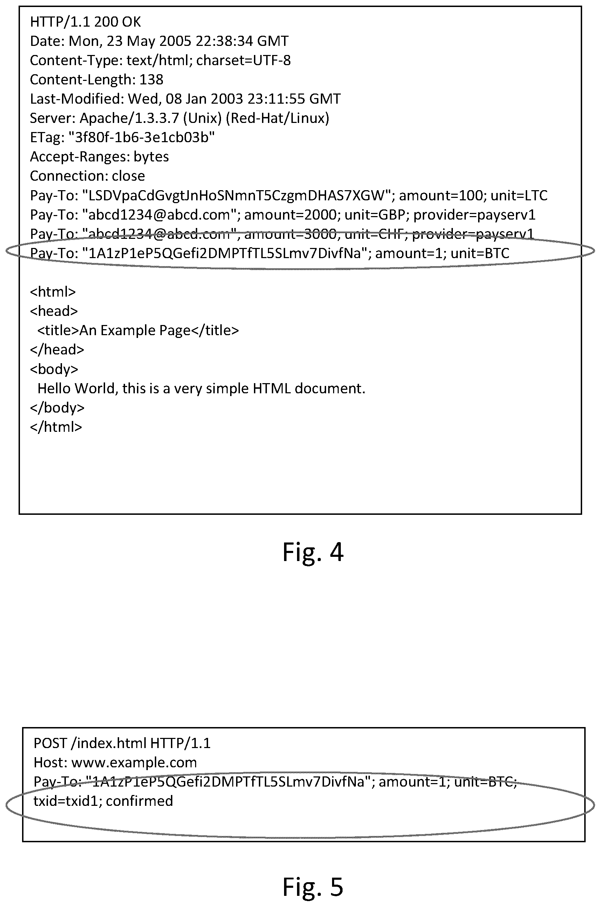

Refer to Fig. 4 and Fig. 5. In Embodiment Two, the Pay-To field is based on Embodiment One. Different from the Pay-To field of Embodiment One, the Pay-To field of Embodiment Two further includes information of "amount of money" and information of "transaction ID". The Pay-To field encircled by an elliptic shape in Fig. 4 is used for payment collection. The Pay-To field encircled by an elliptic shape in Fig. 5 is used for information feedback, whereby to synchronize the transmission of information and value, wherein the encircled Pay-To field is added in the header field of the HTTP request message or the HTTP response message.

In details, the payment collection information of the HTTP request message or the HTTP response message may be in a format of:

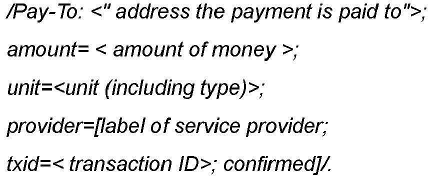

For examples,

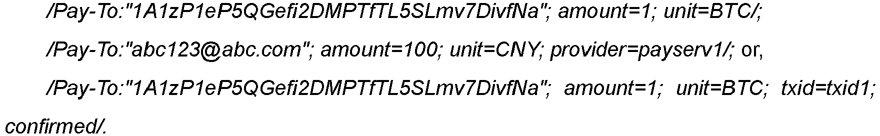

"//" is used to define a complete header field of Pay-To, whereby a plurality of header fields of "Pay-To" are provided for the server to select from different payment collection method. However, the "//" character itself does not belong to the header field of "Pay-To".

In Embodiment Two, the payment collection information is added in the header field of the HTTP payment collection response message. The position of the payment collection information is identifiable, and the position itself neither influences the transmission and reading of the normal information in HTTP nor influences the webpage contents. The information transmission process involves transmission of value in the transmission of webpage contents through the HTTP request message and the transmission of value for payment collection through the payment collection information of the HTTP response message. However, the efficiency may be raised through technical improvement. For example, a specific digital currency is used in remittance, or the third-party digital/electronic currency is used in real-time payment. Thus, the transmission of information is not obviously delayed by the transmission of value. Therefore, the present invention achieves a technical effect to prevent from mutual interference between the transmission of information and the transmission of value in HTTP.

In details, the webpage contents can be transmitted in HTTP protocol, such as text, pictures, audio, video, files, or a webpage.

In details, the payment collection information is provided by the server and may be set up by the management organization of the server. The user terminal can be either an information transmission terminal, such as a browser, a media player, a reader, or a device having HTTP function, such as a mobile phone, a tablet computer, or a personal computer.

Specifically, the payment collection information includes a payment target and a payment collection method. The payment target is a payment address or a payment account. The payment-collection address may be a Bitcoin address or a Litecoin address, etc. The payment-collection account may be an account of PayPal or Alipay, etc. The payment collection information carries the information of the service providers of the accounts, such as the information of PayPal, Alipay and BitPay. Besides, the payment collection information also includes currency units, such as Chinese Yuan (CNY), US dollar (USD), Bitcoin (BTC), and Litecoin (LTC).

In Embodiment Two, the payment collection information is directly provided by the server. The user can directly realize payment to the provider of the contents without using a dedicated account. Further, the receiver of the HTTP response message can undertake accessible remittance to an arbitrary content provider. Therefore, the present invention achieves convenient and human-friendly transmission of information and value.

Refer to Fig. 1. It is preferred: the payment collection message management module is also configured to dispatch the funding management module to verify the usability of the payment collection information.

In Embodiment Two, the funding management module verifies the payment collection information to guarantee the legality and security of the payment collection information.

Refer to Fig. 1. It is preferred: the HTTP-based user terminal payment collection system of Embodiment Two further includes a database module. The database module is configured to store or update the remittance records and the remittance priority. The database module respectively interacts with the payment collection message management module and the funding management module. The payment collection message management module is also configured to dispatch the database module to perform selection according to the remittance priority, thereby determining an optimized piece of payment collection information as the remittance method in a remittance operation. The optimized piece of payment collection information is a piece of usable payment collection information whose payment target has a highest priority and whose payment collection method has a highest priority.

It is preferred: the payment collection information includes a plurality of payment targets, a plurality of payment collection methods, and a plurality of currency units; an optimized piece of payment collection information is determined according to a usability verification and the priority of payment collection.

In details, the priority of payment collection includes the priority of payment targets and the priority of the payment collection methods. The priority of payment collection further includes the priority of currency units. According to the priority of currency units, an optimized currency unit is determined in the optimized piece of the payment collection information. It is preferred: the priority of payment collection can be set up by the service provider.

In details, the remittance operation can be automatically executed through a script, a digital currency protocol, or an interaction with a third-party agency. The remittance operation may be performed according to the settlement amount after receiving the HTTP payment collection response message and before generating the HTTP payment collection confirmation request message. The user can set up an allowed minimum amount of each remittance to prevent from that a great number of small remittances appear.

It is preferred: the remittance may be performed through coin-mixing service or using a strong-privacy digital currency to prevent from that track is undertaken according to the address of the digital currency and the serial ID of the transaction. Thereby, Embodiment Two can decrease the risk of leaking the addresses and amount of the digital currency of either the user or the remittee or, both.

In Embodiment Two, the database module selects an optimized piece of the verified payment collection information. Thus, the server can provide many pieces of different payment collection information to increase the compatibility of the payer and the payee. Therefore, Embodiment Two can realize optimized, diversified and human-friendly payment collection.

Refer to Fig. 1. It is preferred: the database module is also used in the lookup of remittance records. In addition, the payment collection message management module is used to: receive the lookup request sent out by the user; dispatch the funding management module to verify the validity of the lookup request; dispatch the database module to acquire the queried contents according to the valid lookup request; and then, generates the lookup result according to the queried contents and feeds back the lookup result to the user.

It is preferred: the payment collection message management module places the optimized pieces of payment collection information in the header field of the HTTP payment collection confirmation request message.

In Embodiment Two, the payment collection message management module places the optimized piece of payment collection information in the header field of the HTTP request message to feed back the payment-related information to the server; the user may send out a lookup request to query related contents in the database module. Therefore, the present invention achieves a technical effect of diversified and human-friendly information feedback.

Refer to Fig. 1. It is preferred in Embodiment Two: the HTTP-based user terminal payment collection system further includes an internal and external network interface. The internal and external network interface includes a digital currency interaction module and a third-party agency digital/electronic currency interaction module. The digital currency interaction module and the third-party digital/electronic currency interaction module respectively interact with the funding management module to convert between internal requests from the funding management module and external requests from a network for executing remittance physically or verifying information.

Refer to Fig. 1. The digital currency interaction module is a module that supports a digital currency protocol. The third-party digital/electronic currency interaction module is a module that supports an interface of a third-party agency.

In Embodiment Two, the HTTP-based user terminal payment collection system uses the digital currency interaction server and the third-party digital/electronic currency interaction server to convert between internal requests from the funding management module and external requests from a network for executing remittance physically or verifying information. Thereby, the HTTP-based user terminal payment collection system can support the remittance of multiple kinds of currencies and diversifies remittance approaches. Further, the conversion of the internal request and the external request realizes the synchronized cross-platform transmission of information and value.

Refer to Fig. 1. In Embodiment Two, the server terminal includes an internal and external network interface. The internal and external network interface includes a digital currency interaction module and a third-party digital/electronic currency interaction module. The function and conversion mode of the internal and external network interface is similar to that of Embodiment One or that of the user terminal of Embodiment Two.

It is preferred in Embodiment Two: the HTTP-based user terminal payment collection system further includes a payment switch and/or a payment collection switch. The payment switch is configured to turn on and off a function of identifying the payment collection information, whereby to control the remittance operation. The payment collection switch is configured to control whether payment collection information is placed in the HTTP request message sent to the webpage service terminal whereby to control the payment collection from the webpage service terminal.

In details, after the payment switch is turned on and after the user terminal receives an HTTP payment collection response message, the user terminal performs remittance and sends an HTTP payment collection confirmation request message to the server, whereby the server can provide webpage contents according to the circumstances. After the payment switch is turned off and after the user terminal receives an HTTP payment collection response message sent out by the server, the user terminal neglects the payment collection information therein and sends an HTTP ordinary request message to the server, whereby the server can handle it as an ordinary case.

In details, after the payment collection switch is turned on, the user terminal sends out an HTTP request message containing payment collection information, i.e. an HTTP payment collection request message, whereby the server can identify the payment collection information of the HTTP payment collection request message, provide webpage contents according to the circumstances, perform a settlement and perform remittance to the user. After the payment collection switch is turned off, the user terminal sends out an HTTP request message that contains no payment collection information, i.e. an ordinary request message, whereby the server can handle it as an ordinary case.

In Embodiment Two, the payment switch and/or the payment collection switch is used to turn on/off the transmission of value in the HTTP response message. Therefore, the present invention can achieve a technical effect of human-friendly value transmission.

It is preferred in Embodiment Two: the present invention further includes an HTTP server extension module; the payment collection message management module of the server is loaded into the HTTP extension module, whereby to identify the HTTP request message containing payment collection confirmation information.

In Embodiment Two, identification of the payment collection information of the HTTP request message is enabled via loading the payment collection message management module into the HTTP server extension module, whereby to extend an ordinary server and achieve a technical effect of low cost and wide application range.

It is preferred: the payment collection message management module of the HTTP-based user terminal payment collection system can perform processing according to the HTTP response message. For example, the payment collection message management module can use the message window or the status icon to remind the user and feedback the information of abnormality or payment to the user. In detail, the user terminal undertakes a corresponding treatment according to the received HTTP response message, such as showing a webpage, reminding the user, or handling an abnormality. An abnormal state may be that no response is received after an HTTP payment collection confirmation request has been sent to the server for a long time or that a message of HTTP abnormality is returned (such as "404 Page not found").

Below are listed the technical effects of the payment collection system of this embodiment.

In the case of subscribing contents online, the user needn't pay for a total set of contents but may only pay for an individual page of the browsed contents through the integration of HTTP and a digital currency protocol. Because of the cross-platform characteristic of digital currency, the user needn't register a dedicated account but only needs a suitable browser to browse on compatible websites to undertake payment. Therefore, the user has high-level freedom and option. For the company adopting the abovementioned mode, it can directly deliver the online contents to the targeted users, whereby to reduce the intermediate cost, get better marketing effect, and generate higher user proactivity.

In the case of downloading files, HTTP not only can transfer website contents (such as HTML) but also can directly transmit images or files. Therefore, the prepayment of the server is not limited to HTML webpages but also may be applied to all the contents interacting through HTTP. Thus, the present invention can achieve a better file sharing effect and a better advertisement effect.

### Embodiment Three

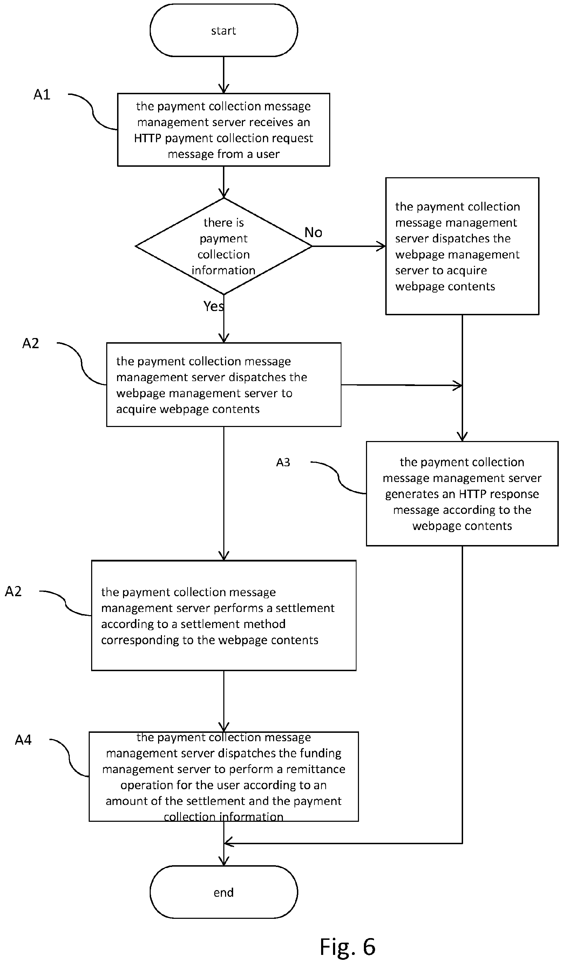

Refer to Fig. 6. Based on Embodiment One, Embodiment Three provides a payment collection method of the HTTP-based server payment collection system. The HTTP-based server payment collection system includes a payment collection message management server, a webpage management server, and a funding management server. The method of Embodiment Three includes steps:
Step A1: the payment collection message management server receives an HTTP payment collection request message from a user and identifies payment collection information of the HTTP payment collection request message;
Step A2: the payment collection message management server dispatches the webpage management server to acquire webpage contents and performs a settlement according to a settlement method corresponding to the webpage contents;
Step A3: the payment collection message management server generates an HTTP payment collection confirmation response message according to the webpage contents and feeds the HTTP payment collection confirmation response message back to the user so as to provide the webpage contents to the user; and
Step A4 executed during or after Step A3: the payment collection message management server dispatches the funding management server to perform a remittance operation for the user according to an amount of the settlement and the payment collection information, wherein the payment collection information includes a payment target and a payment collection method; the payment collection information is added in a header field of the HTTP payment collection request message.

Embodiment Three is described in detail below.

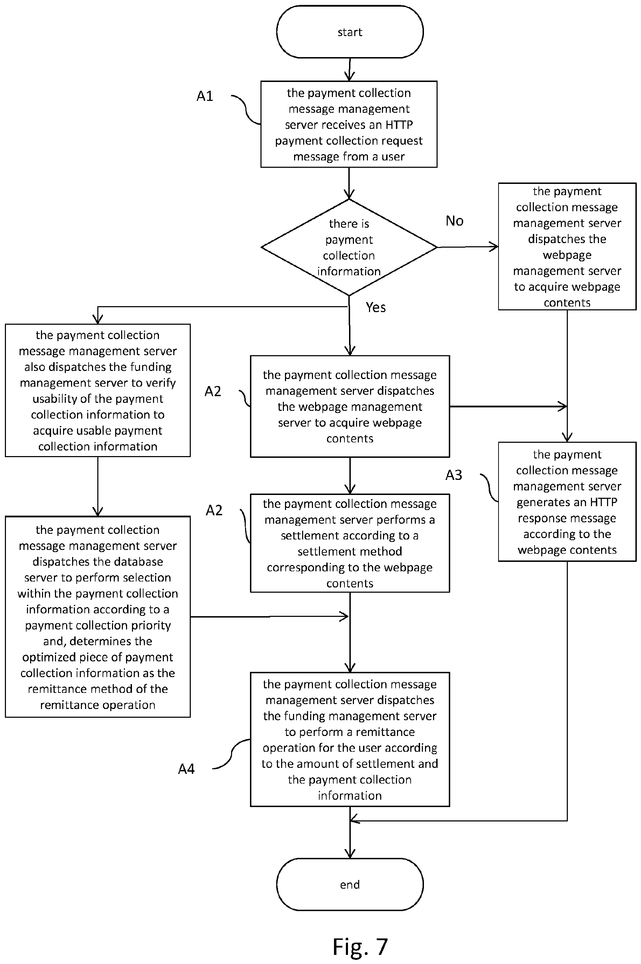

Refer to Fig. 7. It is preferred: in Step A2, while dispatching the webpage management server to acquire the webpage contents, the payment collection message management server also dispatches the funding management server to verify usability of the payment collection information to acquire usable payment collection information.

Refer to Fig. 7. It is preferred: the server payment collection system further includes a database server. In Step A2, after acquiring the usable payment collection information, the payment collection message management server dispatches the database server to perform selection in the payment collection information according to a payment collection priority in the database server, thereby determining an optimized piece of payment collection information as a remittance method of the remittance operation. The optimized piece of payment collection information is a piece of usable payment collection information whose payment target has a highest priority and whose payment collection method has a highest priority.

In Embodiment Three, the funding management server is configured to verify the payment collection information to guarantee the legality and security of the payment collection information. The database server is configured to undertake optimized selection of the verified payment collection information to provide the user diversified payment collection information and improve the compatibility between the payment party and the payment collection party. Therefore, Embodiment Three achieves optimization and humanity of payment collection and diversification of payment collection methods.

It is preferred: in Step A2, after the optimized piece of payment collection information is determined, the payment collection message management server places the optimized piece of payment collection information in a header of the webpage contents.

In Embodiment Three, the payment collection message management server is configured to place the optimized payment collection information in the header field of the webpage contents to feed the payment collection-related information back to the user. Further, the user may send a lookup request through the user terminal to look up related contents in the database server. Therefore, Embodiment Three realizes diversified and human-friendly information feedback.

In Embodiment Three, the payment collection method of the HTTP-based server payment collection system further includes Step A5, which is executed after Step A4. In Step A5, the funding management server receives a result of the remittance operation and transmits the result to the database server for storage.

In Embodiment Three, it is preferred: the server payment collection system further includes an internal and external network interface, wherein the internal and external network interface includes a digital currency interaction server and a third-party digital/electronic currency interaction server; Step A4 of the payment collection method specifically includes:
Step A41: the funding management server receives a remittance allocation instruction from the payment collection message management server;
Step A42: the funding management server dispatches the database server to obtain an amount of the settlement and the optimized piece of payment collection information;
Step A43: according to the amount of the settlement and the optimized piece of payment collection information, the funding management server transmits an internal request to the digital currency interaction server or the third-party digital/electronic currency interaction server;
Step A44: the digital currency interaction server or the third-party digital/electronic currency interaction server converts the internal request into an external request for executing the remittance operation.

In Embodiment Three, the digital currency interaction server and the third-party digital/electronic currency interaction server are configured to convert an internal request coming from the funding management server into an external request to execute physical remittance. Therefore, Embodiment Three can support the remittance of multiple kinds of currencies and diversifies remittance approaches. Further, the conversion of the internal request and the external request realizes the synchronized cross-platform transmission of information and value.

It is preferred: the server payment collection system further includes a payment switch, wherein in Step A1, the process of identifying the payment collection information of the HTTP payment collection request message specifically includes steps: determining whether the payment switch is turned on; if the payment switch is turned on, the payment collection message management server identifies the payment collection information of the HTTP payment collection request message; if the payment switch is turned off, the payment collection message management server does not identify the payment collection information of the HTTP payment collection request message.

In Embodiment Three, the payment switch is configured to turn on or off the value transference in the HTTP request message. Therefore, Embodiment Three provides a human-friendly payment collection system.

### Embodiment Four

Based on Embodiment Two, Embodiment Four provides a payment collection method of an HTTP-based payment collection message management server, which includes steps:
Step B1: the payment collection message management server receives an HTTP payment collection request message sent by a user and identifies payment collection information of the HTTP payment collection request message;
Step B2: the payment collection message management server sends out a webpage allocation instruction to acquire webpage contents according to the HTTP payment collection request message;
Step B3: the payment collection message management server generates an HTTP payment collection confirmation response message according to the webpage contents, feeds the HTTP payment collection confirmation response message back to the user so as to provide the webpage contents to the user;
Step B4 executed during Step B3: the payment collection message management server performs a settlement according to a settlement method of the webpage contents; and
Step B5 executed during or after Step B3 or during or after Step B4: the payment collection message management server sends out a remittance allocation instruction to perform a remittance operation for the user according to an amount of the settlement and the payment collection information, wherein the payment collection information includes a payment target and a payment collection method; the payment collection information is added in a header field of the HTTP payment collection request message.

Embodiment Four has the following technical effects.
(1). Via adding payment collection information in the HTTP request message and integrating HTTP with digital/electronic currency, Embodiment Four enables the conventional HTTP to have financial functions, such as payment collection. The user may perform payment collection to the webpage contents provider while HTTP transmits information. Thus, Embodiment Four can implement transmission of value and enhance the application of HTTP to finance.
(2). Embodiment Four adds payment collection information in a header field of an HTTP payment collection request message, which is identifiable, and which neither influences readability and transmission of normal information in HTTP nor affects the contents of webpages. In the information transmission process of acquiring webpage contents through the HTTP request message and in the value transmission process for payment collection through the payment collection information of the HTTP request message, the information transmission does not involve the value transmission; thus, the transmission of value does not delay the transmission of information normally. Therefore, Embodiment Four achieves a technical effect to prevent from mutual interference between the transmission of information and the transmission of value in HTTP.
(3). In Embodiment Four, the payment collection information is directly provided by the user. The user can directly realize payment collection without using a dedicated account. Further, the requester of the HTTP payment collection request message can undertake accessible remittance to an arbitrary visitor. Therefore, Embodiment Four achieves convenient and human-friendly transmission of information and value.

### Embodiment Five

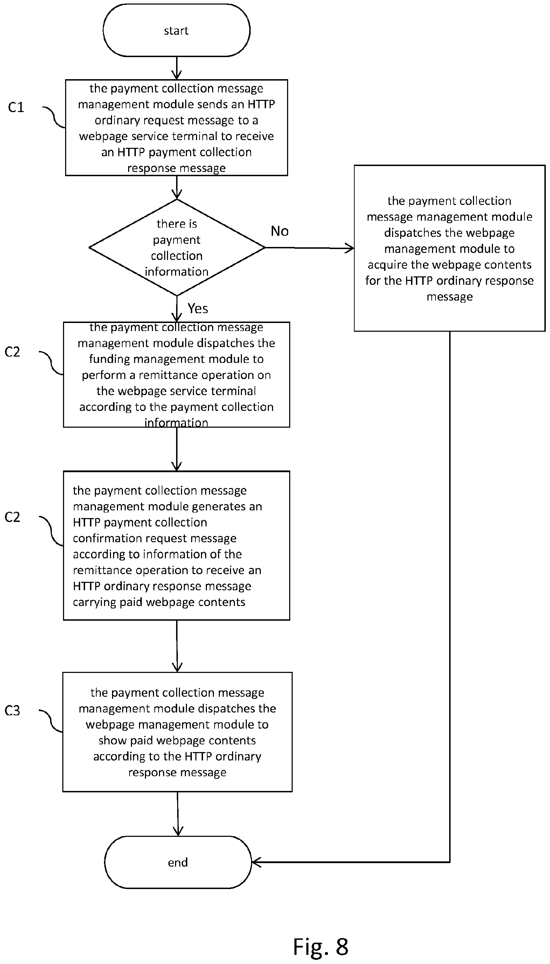

Refer to Fig. 8. Based on Embodiment Two, Embodiment Five provides a payment collection method of an HTTP-based user terminal payment collection system. The HTTP-based user terminal payment collection system includes a payment collection message management module, a webpage management module, and a funding management module. The payment collection method of Embodiment Five includes steps:
Step C1: the payment collection message management module sends an HTTP ordinary request message to a webpage service terminal to receive an HTTP payment collection response message and identify payment collection information of the HTTP payment collection response message;
Step C2: the payment collection message management module dispatches the funding management module to perform a remittance operation on the webpage service terminal according to the payment collection information, generates an HTTP payment collection confirmation request message according to information of the remittance operation and sends out the HTTP payment collection confirmation request message to receive an HTTP ordinary response message carrying paid webpage contents; and
Step C3: the payment collection message management module dispatches the webpage management module to show paid webpage contents according to the HTTP ordinary response message, wherein the payment collection information includes a payment target and a payment collection method; the payment collection information is added in a header field of the HTTP payment collection response message.

Embodiment Five is described in details below.

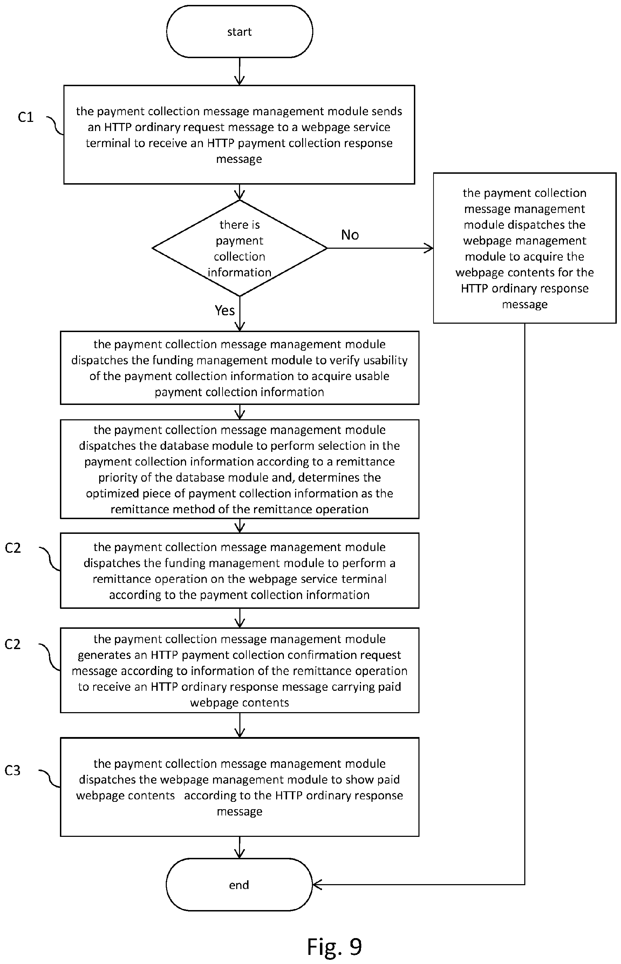

Refer to Fig. 9. It is preferred: in Step C2, before the remittance operation, the payment collection message management module dispatches the funding management module to verify usability of the payment collection information for acquiring usable payment collection information.

Refer to Fig. 9. It is preferred: the HTTP-based user terminal payment collection system further includes a database module; in Step C2, after acquiring the usable payment collection information and before performing the remittance operation, the payment collection message management module dispatches the database module to perform selection in the payment collection information according to remittance priority from the database module, whereby determining an optimized piece of payment collection information as a remittance method of the remittance operation. The optimized piece of payment collection information is a piece of usable payment collection information whose payment target has a highest priority and whose payment collection method has a highest priority.

Embodiment Five uses the funding management module to verify the payment collection information to guarantee the legality and security of the payment collection information. Embodiment Five also uses the database module to undertake optimized selection of the verified payment collection information to provide diversified payment collection information for the user and improve the compatibility between the payment party and the payment collection party. Therefore, Embodiment Five achieves optimization and humanity of payment collection and diversification of payment collection methods.

It is preferred: the HTTP-based user terminal payment collection system further includes an internal and external network interface. The internal and external network interface includes a digital currency interaction module and a third-party digital/electronic currency interaction module. The remittance operation executed by the funding management module includes steps:
Step D1: the funding management module receives a remittance allocation instruction from the payment collection message management module;
Step D2: the funding management module dispatches the database module to obtain an amount for remittance and the optimized piece of payment collection information;
Step D3: according to the amount for remittance and the optimized piece of payment collection information, the funding management module transmits an internal request to the digital currency interaction server or the third-party digital/electronic currency interaction server; and Step D4: the digital currency interaction module or the third-party digital/electronic currency interaction module converts the internal request into an external request for executing the remittance operation.

Embodiment Five uses the digital currency interaction server and the third-party digital/electronic currency interaction server to convert an internal request coming from the funding management server into an external request to execute physical remittance. Therefore, Embodiment Five supports the remittance of multiple kinds of currencies and diversifies remittance approaches. Further, the conversion of the internal request and the external request realizes the synchronized cross-platform transmission of information and value.

It is preferred: the HTTP-based user terminal payment collection system further includes a payment switch; in Step C1, the process of identifying the payment collection information of the HTTP payment collection response message includes steps:
determining whether the payment switch is turned on;
if the payment switch is turned on, the payment collection message management module identifies the payment collection information of the HTTP payment collection response message; and
if the payment switch is turned off, the payment collection message management module does not identify the payment collection information of the HTTP payment collection response message.

Embodiment Five uses the payment switch to turn on or off the value transference in the HTTP payment collection response message. Therefore, Embodiment Five provides a human-friendly payment collection method.

### Embodiment Six

Based on Embodiments One-Five, Embodiment Six uses a browser as the user terminal payment collection system, and integrates the browser and the server payment collection system to demonstrate the system and method of the abovementioned embodiments.

### (A) A case that the user terminal collects payment from the server

(1). The setting up process by the browser user:
   the user sets up the payment collection information of the browser;
   the browser verifies the correctness of the related setting up, for example, the browser uses the instruction *validateaddress* of Bitcoin-cli to verify the validity of the digital currency address;
   if the verification is passed, the webpage is updated according to the state of the *payment collection* button on the main interface of the browser;
   if the payment collection button is turned on, execute a webpage refresh process to handle the situation that the state of the payment collection button is changed while the user browses the webpage;
   if the payment collection button is turned off, the webpage is not refreshed.
(2). The execution process to be undertaken while the *payment collection* button has been turned on during browsing the webpage:
   the user opens the webpage, and the browser sends an HTTP payment collection request message to the server; the payment collection method carried by the message involves the priority of payment collection, for example, the priority degrees decrease from top to bottom;
   if the server does not support the payment collection request, the server returns an HTTP ordinary response message; if the server supports the payment collection request, the server acquires the information of all payment collection methods from the header field of the HTTP payment collection request message;
   if the server accepts one or more payment collection methods, the server generates an HTTP payment collection confirmation response message carrying an acceptable payment collection method that has the highest priority in the HTTP payment collection request message; if the server does not accept any payment collection method, the server generates an HTTP ordinary response message;
   the server performs settlement according to circumstances, such as the number of clicking, behaviors, staying time, access time, webpage type, and reward methods, and links the related information (such as address/account+unit) to the payment collection method of the HTTP payment collection confirmation response message;
   the server provides required contents according to circumstances; for example, the server provides HTML codes of webpages and binary files and places them in the generated HTTP response message;
   the server sends the generated HTTP response message to the browser; because the generation process of the response message does not involve remittance, the response of the server is not delayed;
   the user browser undertakes corresponding treatments according to the received HTTP response message, such as showing the webpage, reminding the user, or handling abnormalities; part of possible abnormal states are as follows: the HTTP payment collection confirmation response message is received, but the payment collection method of the response message is not any one of the payment collection methods in the request message; no response is received after an HTTP payment collection confirmation request message has been sent to the server for a long time or
   that a message of HTTP abnormality is returned (such as "404 Page not found").
(3). The execution process to be undertaken while the *payment collection* button has been turned off during browsing the webpage:
   the user opens the webpage, and the browser sends an HTTP ordinary request message to the server;
   the server generates an HTTP ordinary response message;
   the server provides required contents according to circumstances; for example, the server provides HTML codes of webpages and binary files and places them in the generated HTTP ordinary response message;
   the server sends the generated HTTP response message to the browser;
   the user browser undertakes corresponding treatments according to the received HTTP response message, such as showing the webpage, reminding the user, or handling abnormalities; an abnormal state may be that the browser receives an HTTP payment collection confirmation response message, that no response is received after an HTTP ordinary request message has been sent to the server for a long time, or that a message of HTTP abnormality is returned (such as "404 Page not found").
(4). The execution process to be undertaken while the state of the *payment collection* button is changed during browsing the webpage:
   the user browser determines whether to remind the user to refresh the webpage; if the user is performing an operation that is not allowed to refresh, such as filling a form, the browser should give the user a corresponding alert;
   if the browser can directly refresh the webpage, or if the user agrees to sends a new HTTP request message and the new state of the payment collection button is "turned on", the browser sends a new HTTP payment collection request message to the server; if the new state of the payment collection button is "turned off', the browser sends a new HTTP ordinary request message to the server;
   the server responds a corresponding webpage according to the new request; then, the user browser undertakes a corresponding treatment, such as refreshing the corresponding webpage; if the browser cannot directly refresh the webpage and the user does not agree to send a new HTTP request, the browser does not undertake a further treatment.
(5). The process that the server remits to the user:
   the server remits to the user through a digital currency protocol or an interaction mechanism JSON/API of the third-party agency payment mechanism; the remittance can be automatically executed through a script, a digital currency protocol, or an interaction mechanism of the third-party agency; the remittance operation can be performed at a specified time point periodically, such as once per day or once per week; the server may set an allowed minimum amount for each remittance to prevent from that a great number of small remittances appear.
   the server updates the information corresponding to settlement and remittance.
(6). The process that the user looks up the details of the bill:
   the user visits the lookup webpage provided by the server;
   if a digital currency is used, the user inputs the payment collection address (such as Bitcoin) to the webpage, customizes a verification message, and gets a generated signature (such as a signature generated by the instruction *signmessage* of Bitcoin-cli or a graphic interface); if the browser supports the digital currency protocol, the browser may directly send the related verification information to the server through HTTP or other protocols;
   if a digital/electronic currency account is used, the user inputs the corresponding verification information and logging information (such as username/password or certificate of identity) of the third-party agency payment mechanism; if the browser supports the corresponding account, the browser may directly send the related verification information to the server through HTTP or other protocols;
   the server verifies whether the user is exactly the owner of the payment collection address (such as through the instruction *signmessage* of Bitcoin-cli or a graphic interface) or the account (such as through the interaction mechanism JSON/API of the third-party agency payment mechanism); if the verification is done, the server provides the details of the corresponding bill and remittance or sends the details to the mailbox provided by the user; if the verification fails, the server handles it as an abnormality.

### (B) A case that the server collects payment from the user terminal

(1). The setting up process by the browser user:
   the user sets up the payment collection information of the browser;
   the browser verifies the correctness of the related setting up; for example, the browser uses the instruction *validateaddress* of Bitcoin-cli to verify the validity of the digital currency address and the private key;
   if the verification is passed, the webpage is updated according to the state of the *payment collection* button on the main interface of the browser;
   if the payment collection button is turned on, the browser processes the payment collection information of the received HTTP payment collection response message and executes a webpage refresh process to handle the situation that the state of the "payment collection" button is changed while the user browses the webpage;
   if the payment collection button is turned off, the browser neglects the payment collection information of the received HTTP payment collection response message.
(2). The execution process to be undertaken while the *payment collection* button has been turned on during browsing the webpage:
   the user opens the webpage, and the browser sends an HTTP request message to the server and receives an HTTP payment collection response message from the server; the payment collection method carried by the message involves the priority of payment collection; for example, the priority degrees decrease from top to bottom;
   if the browser does not support the payment collection request, the browser sends an HTTP ordinary request message; if the browser supports the payment collection request, the browser acquires the information of all payment collection methods from the header field of the HTTP payment collection response message;
   if the browser accepts one or more payment collection methods, the browser generates an HTTP payment collection confirmation request message carrying an acceptable payment collection method that has the highest priority in the HTTP payment collection response message; if the browser does not accept any payment collection method, the browser generates an HTTP ordinary request message;
   if the browser generates an HTTP payment collection confirmation request message, the browser remits according to the settlement amount and associates the related information (such as "address/account+unit") to the payment collection method of the HTTP payment collection confirmation request message;
   the browser shows the related contents, such as a webpage;
   the user terminal sends the generated HTTP request message to the browser; although the information transmission process may involve transmission of value, the technical advancement may improve the efficiency; for example, a specific digital currency or an instant remittance mechanism of the digital/electronic currency third-party agency is used in real-time payment; thus, the information transmission is not significantly delayed by the value transmission;
   the server undertakes corresponding treatments according to the received HTTP request message, such as returning an HTTP response message carrying a corresponding webpage, or handling abnormalities; it is an example of an abnormal state: the server receives an HTTP payment collection confirmation request message; however, the payment collection method in the request message is not one of the payment collection methods in the HTTP payment collection response message;
   the user browser undertakes corresponding treatments according to the received HTTP response message, such as showing a webpage or handling an abnormality.
(3). The execution process to be undertaken while the *payment collection* button has been turned off during browsing the webpage:
   the user opens the webpage, and the browser sends an HTTP ordinary request message to the server;
   the server generates an HTTP ordinary response message;
   the server sends the generated HTTP response message to the browser;
   the user browser neglects the payment collection information of the received HTTP payment collection response message and undertakes corresponding treatments, such as showing the webpage.
(4). The execution process to be undertaken while the state of the *payment collection* button is changed during browsing the webpage:
   if the user browser receives an HTTP payment collection response message and the new state of the payment collection button is "turned on", the browser reminds the user to remit according to the payment collection information of the response message; if the user agrees remittance, the browser remits and sends an HTTP payment collection confirmation request message; if the new state of the payment collection button is "turned off', the browser stops remitting according to the payment collection information of the response message and sends a new HTTP ordinary request message to the server according to circumstances;
   the browser reminds the user to refresh the webpage if necessary.
(5). The process that the user remits to the server:
   the user browser remits to the server through a digital currency protocol or an interaction mechanism JSON/API of the third-party agency payment mechanism; the remittance may be automatically executed through a script, a digital currency protocol, or an interaction mechanism of the third-party agency; the browser undertakes remittance according to the settlement amount after receiving the payment collection response message and before generating the HTTP payment collection confirmation request message; the server may set an allowed minimum amount for each remittance to prevent from that a great number of small remittances appear;
   the browser and the server update the information of related charges and remittances.
(6). The process that the user looks up the details of remittance:
   the user browser acquires the related information of remittance from the database module and presents the information in the webpage or in a graph.

The payment collection method of Embodiment Six has the following technical effects:
(1) Embodiment Six places payment collection information in an HTTP request or response message and integrates HTTP with a digital/electronic currency to make the conventional HTTP have financial functions, such as payment collection, wherein the interoperation of the payment collection information, the payment collection message management server with the webpage management server and the funding management server not only enables information transmission in HTTP but also realizes mutual remittance between the user terminal and the server; therefore, Embodiment Six realizes value transmission of HTTP and enables financial applications of HTTP.
(2) Embodiment Six places the payment collection information in a header filed of an HTTP request message or an HTTP response message; the position of the payment collection information is recognizable; the payment collection information neither influences readability and transmission of normal information in HTTP nor affects the contents of webpages; for the information transmission of acquiring webpage contents and the value transmission of collecting payment, the information transmission does not involve the value transmission; therefore, the value transmission would not delay the information transmission; thus, Embodiment Six can achieve a technical effect that the information transmission and the value transmission do not interfere with each other in HTTP.
(3) In Embodiment Six, the payment collection information is directly provided by the user or the webpage service terminal; the user can directly realize payment or payment collection without using a dedicated account; further, the receiver of the HTTP payment collection request message or the HTTP payment collection response message can undertake barrier-free remittance to an arbitrary visitor or server; therefore, Embodiment Six achieves convenient and human-friendly transmission of information and value.

The embodiments of the present invention have been described in detail in interoperation with the attached drawings. However, these embodiments are only to exemplify the present invention but not to limit the scope of the present invention. Any equivalent modification or variation made according to the characteristics or spirit of the present invention is to be also included by the scope of the present invention.

## Claims

1. An HTTP-based server payment collection system, comprising a payment collection message management server, a webpage management server, and a funding management server, wherein:
the payment collection message management server interoperates with the webpage management server and the funding management server;
the payment collection message management server is configured to receive an HTTP payment collection request message sent from a user and identify payment collection information of the HTTP payment collection request message;
the payment collection message management server is also configured to dispatch the webpage management server to acquire webpage contents and perform a settlement according to a settlement method corresponding to the webpage contents;
the payment collection message management server is also configured to generate an HTTP payment collection confirmation response message according to the webpage contents and feed the HTTP payment collection confirmation response message back to the user, whereby providing the webpage contents to the user; and
the payment collection message management server is also configured to dispatch the funding management server to perform a remittance operation for the user according to an amount of the settlement and the payment collection information, wherein:
the payment collection information includes a payment target and a payment collection method; and
the payment collection information is added in a header field of the HTTP payment collection request message.

2. The HTTP-based server payment collection system according to claim 1, wherein the payment collection message management server is also configured to dispatch the funding management server to verify usability based on the payment collection information.

3. The HTTP-based server payment collection system according to claim 2, further comprising a database server, wherein
the database server is configured to store or update the payment collection information, the settlement method, priority of payment collection; and
the database server respectively interacts with the payment collection message management server and the funding management server; the payment collection message management server is also configured to dispatch the database server to perform selection in the payment collection information according to the priority of payment collection to determine an optimized piece of payment collection information as a remittance method of the remittance operation,
wherein the optimized piece of payment collection information is a piece of usable payment collection information whose payment target has a highest priority and whose payment collection method has a highest priority.

4. The HTTP-based server payment collection system according to claim 3, wherein the payment collection message management server is also configured to place the optimized piece of payment collection information in a header of the webpage contents as a feedback to the user.

5. The HTTP-based server payment collection system according to claim 3, wherein
the database server is also configured to store detailed records of settlement and remittance; the payment collection message management server is also configured to:
receive a lookup request sent from the user and dispatch the funding management server to verify the validity of the lookup request;
according to the verified lookup request, dispatch the webpage management server to obtain the webpage contents and dispatch the database server to obtain lookup contents; and
generate a lookup result as a feedback to the user according to the webpage contents and the lookup contents.

6. The HTTP-based server payment collection system according to any one of claims 1-5, comprising an internal and external network interface, wherein
the internal and external network interface includes a digital currency interaction server and a third-party digital/electronic currency interaction server;
the digital currency interaction server and the third-party digital/electronic currency interaction server respectively interact with the funding management server to convert between internal requests from the funding management server and external requests from a network for executing remittance physically or verifying information.

7. The HTTP-based server payment collection system according to claim 6, wherein the digital currency interaction server is a server that executes a digital currency service program; the third-party digital/electronic currency interaction server is a server supporting local or third-party interfaces.

8. The HTTP-based server payment collection system according to any one of claims 1-5, comprising a payment switch and/or a payment collection switch, wherein
the payment switch is configured to turn on and off a function of identifying the payment collection information to control the remittance operation;
the payment collection switch is configured to control whether the payment collection information is generated in a HTTP response message to control payment collection from the user.

9. An HTTP-based user terminal payment collection system, comprising a payment collection message management module, a webpage management module, and a funding management module, wherein:
the payment collection message management module interoperates with the webpage management module and the funding management module;
the payment collection message management module is configured to send an HTTP ordinary request message to a webpage service terminal to receive an HTTP payment collection response message and identify payment collection information of the HTTP payment collection response message;
the payment collection message management module is also configured to dispatch the funding management module to perform a remittance operation on the webpage service terminal according to the payment collection information, generate an HTTP payment collection confirmation request message according to information of the remittance operation and send out the HTTP payment collection confirmation request message to receive an HTTP ordinary response message carrying paid webpage contents; and
the payment collection message management module is also configured to dispatch the webpage management module to show the paid webpage contents according to the HTTP ordinary response message, wherein
the payment collection information includes a payment target and a payment collection method;
the payment collection information is added in a header field of the HTTP payment collection response message.

10. The HTTP-based user terminal payment collection system according to claim 9, wherein the payment collection message management module is also configured to dispatch the funding management module to verify usability of the payment collection information.

11. The HTTP-based user terminal payment collection system according to claim 10, comprising a database module, wherein:
the database module is configured to store or update a remittance collection record and remittance priority;
the database module respectively interacts with the payment collection message management module and the funding management module; and
the payment collection message management module is also configured to dispatch the database module to perform selection in the payment collection information according to the remittance priority to determine an optimized piece of payment collection information as a remittance method of the remittance operation, wherein the optimized piece of payment collection information is a piece of usable payment collection information whose payment target has a highest priority and whose payment collection method has a highest priority.

12. The HTTP-based user terminal payment collection system according to any one of claims 9-11, comprising an internal and external network interface, wherein:
the internal and external network interface includes a digital currency interaction module and a third-party digital/electronic currency interaction module;
the digital currency interaction module and the third-party digital/electronic currency interaction module respectively interact with the funding management module to convert between internal requests coming from the funding management module and external requests coming from a network for executing remittance physically or verifying information.

13. The HTTP-based user terminal payment collection system according to claim 12, wherein:
the digital currency interaction module is a module that executes a digital currency service program; the third-party digital/electronic currency interaction module is a module that supports local or third-party interfaces.

14. The HTTP-based user terminal payment collection system according to any one of claims 9-11, comprising a payment switch and/or a payment collection switch, wherein:
the payment switch is configured to turn on and off a function of identifying the payment collection information to control the remittance operation;
the payment collection switch is configured to control whether the payment collection information is to be generated in a HTTP request message, which is sent to the webpage service terminal, so as to control payment collection from the webpage service terminal.

15. A payment collection method of the HTTP-based server payment collection system according to any one of claims 1-8, wherein the HTTP-based server payment collection system comprises a payment collection message management server, a webpage management server, and a funding management server, comprising:
Step A1: the payment collection message management server receives an HTTP payment collection request message sent from a user and identifies payment collection information in the HTTP payment collection request message;
Step A2: the payment collection message management server dispatches the webpage management server to acquire webpage contents and performs a settlement according to a settlement method corresponding to the webpage contents;
Step A3: the payment collection message management server generates an HTTP payment collection confirmation response message according to the webpage contents, and feeds the HTTP payment collection confirmation response message back to the user to provide the webpage contents to the user; and
Step A4 executed during or after Step A3: the payment collection message management server dispatches the funding management server to perform a remittance operation for the user according to an amount of the settlement and the payment collection information, wherein:
the payment collection information includes a payment target and a payment collection method;
the payment collection information is added in a header field of the HTTP payment collection request message.

16. The payment collection method according to claim 15, wherein in Step A2, while the payment collection message management server dispatches the webpage management server to acquire the webpage contents, the payment collection message management server also dispatches the funding management server to verify usability of the payment collection information to acquire usable payment collection information.

17. The payment collection method according to claim 16, wherein:
the server payment collection system further comprises a database server;
in Step A2, after acquiring the usable payment collection information, the payment collection message management server dispatches the database server to perform selection in the payment collection information according to a payment collection priority in the database server, whereby determining an optimized piece of payment collection information as a remittance method of the remittance operation;
the optimized piece of payment collection information is a piece of usable payment collection information whose payment target has a highest priority and whose payment collection method has a highest priority.

18. The payment collection method according to claim 17, wherein in Step A2, after the optimized piece of payment collection information is determined, the payment collection message management server places the optimized piece of payment collection information in a header of the webpage contents.

19. The payment collection method according to claim 17, comprising Step A5, which is executed after Step A4, wherein
in Step A5, the funding management server receives a result of the remittance operation and transmits the result to the database server for storage.

20. The payment collection method according to any one of claims 17-19, that the server payment collection system further comprises an internal and external network interface, wherein the internal and external network interface includes a digital currency interaction server and a third-party digital/electronic currency interaction server;
Step A4 of the payment collection method specifically includes:
Step A41: the funding management server receives a remittance allocation instruction from the payment collection message management server;
Step A42: the funding management server dispatches the database server to obtain an amount of the settlement and the optimized piece of payment collection information;
Step A43: according to the amount of the settlement and the optimized piece of payment collection information, the funding management server transmits an internal request to the digital currency interaction server or the third-party digital/electronic currency interaction server; and
Step A44: the digital currency interaction server or the third-party digital/electronic currency interaction server converts the internal request into an external request for executing the remittance operation.

21. The payment collection method according to any one of claims 15-19, that the server payment collection system further comprises a payment switch, wherein in Step A1, the process of identifying the payment collection information of the HTTP payment collection request message specifically includes steps:
determining whether the payment switch is turned on;
if the payment switch is turned on, the payment collection message management server identifies the payment collection information of the HTTP payment collection request message;
if the payment switch is turned off, the payment collection message management server does not identify the payment collection information of the HTTP payment collection request message.

22. A payment collection method of an HTTP-based payment collection message management server, comprising
Step B1: the payment collection message management server receives an HTTP payment collection request message from a user and identifies payment collection information of the HTTP payment collection request message;
Step B2: the payment collection message management server sends out a webpage allocation instruction to acquire webpage contents according to the HTTP payment collection request message;
Step B3: the payment collection message management server generates an HTTP payment collection confirmation response message according to the webpage contents, and feeds the HTTP payment collection confirmation response message back to the user to provide the webpage contents to the user;
Step B4 executed during Step B3: the payment collection message management server performs a settlement according to a settlement method of the webpage contents; and Step B5 executed during/after Step B3 or during/after Step B4: the payment collection message management server sends out a remittance allocation instruction to perform a remittance operation for the user according to an amount of the settlement and the payment collection information, wherein
the payment collection information includes a payment target and a payment collection method; the payment collection information is added in a header field of the HTTP payment collection request message.

23. A payment collection method of the HTTP-based user terminal payment collection system according to any one of claims 9-14, wherein
the HTTP-based user terminal payment collection system comprises a payment collection message management module, a webpage management module, and a funding management module; wherein the payment collection method comprises:
Step C1: the payment collection message management module sends an HTTP ordinary request message to a webpage service terminal to receive an HTTP payment collection response message and identify payment collection information of the HTTP payment collection response message;
Step C2: the payment collection message management module dispatches the funding management module to perform a remittance operation on the webpage service terminal according to the payment collection information, generates an HTTP payment collection confirmation request message according to information for the remittance operation and
sends out the HTTP payment collection confirmation request message to receive an HTTP ordinary response message carrying paid webpage contents; and
Step C3: the payment collection message management module dispatches the webpage management module to show the paid webpage contents according to the HTTP ordinary response message, wherein:
the payment collection information includes a payment target and a payment collection method;
the payment collection information is added in a header field of the HTTP payment collection response message.

24. The payment collection method according to claim 23, wherein in Step C2, before the remittance operation, the payment collection message management module dispatches the funding management module to verify usability of the payment collection information for acquiring usable payment collection information.

25. The payment collection method according to claim 24, wherein the HTTP-based user terminal payment collection system further comprises a database module;
in Step C2, after acquiring the usable payment collection information and before performing the remittance operation, the payment collection message management module dispatches the database module to perform selection within the payment collection information according to remittance priority from the database module and, determines the optimized piece of payment collection information as the remittance method of the remittance operation, wherein the optimized piece of payment collection information is a piece of usable payment collection information whose payment target has a highest priority and whose payment collection method has a highest priority.

26. The payment collection method according to claim 25, wherein the HTTP-based user terminal payment collection system further comprises an internal and external network interface; the internal and external network interface includes a digital currency interaction module and a third-party digital/electronic currency interaction module; and the remittance operation executed by the funding management module specifically comprises:
Step D1: the funding management module receives a remittance allocation instruction from the payment collection message management module;
Step D2: the funding management module dispatches the database module to obtain an amount for remittance and the optimized piece of payment collection information;
Step D3: according to the amount for remittance and the optimized piece of payment collection information, the funding management module transmits an internal request to the digital currency interaction server or the third-party digital/electronic currency interaction server;
Step D4: the digital currency interaction module or the third-party digital/electronic currency interaction module converts the internal request into an external request for executing the remittance operation.

27. The payment collection method according to any one of claims 23-26, wherein: the HTTP-based user terminal payment collection system further comprises a payment switch; in Step C1, the step of identifying the payment collection information of the HTTP payment collection response message specifically includes steps:
determining whether the payment switch is turned on;
if the payment switch is turned on, the payment collection message management module identifies the payment collection information from the HTTP payment collection response message;
if the payment switch is turned off, the payment collection message management module does not identify the payment collection information from the HTTP payment collection response message.
